(19) Europäisches Patentamt
European Patent Office
Office européen des brevets

(11) **EP 1 160 565 A1**

(12) **DEMANDE DE BREVET EUROPEEN**

(43) Date de publication:
**05.12.2001 Bulletin 2001/49**

(51) Int Cl.⁷: **G01N 21/35**, G01N 21/31

(21) Numéro de dépôt: **01401408.8**

(22) Date de dépôt: **30.05.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **30.05.2000 FR 0006893**

(71) Demandeurs:
• **GAZ DE FRANCE**
**75017 Paris (FR)**
• **Oldham France S.A.**
**62000 Arras Cedex (FR)**

(72) Inventeurs:
• **Boudet, Thierry**
**38130 Echirolles (FR)**
• **Fantini, Jérôme**
**62000 Arras (FR)**
• **Gamarts, Emelian**
**197198 St. Petersbourg (RU)**
• **Krylov, Vladimir, c/o RNII Elektronstandart**
**196143 St. Petersbourg (RU)**

(74) Mandataire: **Thévenet, Jean-Bruno et al**
**Cabinet Beau de Loménie**
**158, rue de l'Université**
**75340 Paris Cédex 07 (FR)**

(54) **Procédé et dispositif de détection de fuites de gaz**

(57) Le dispositif de détection de la présence d'un gaz particulier au sein d'un mélange gazeux comprend des premier et deuxième moyens (101, 102) d'émission de faisceaux de rayonnement électromagnétique de mesure (131) et de référence (132), qui sont activés alternativement, une cellule de mesure (110), une cellule de filtrage (107), des premier et deuxième moyens (103, 104) de détection des faisceaux de rayonnement électromagnétique, un séparateur de faisceaux (106) et des moyens (121 à 126) d'acquisition synchrone et de traitement des quatre signaux ($U_S^1$, $U_S^2$, $U_R^1$, $U_R^2$ délivrés par les premier et deuxième moyens de détection (103, 104) successivement lorsque les premier et deuxième moyens d'émission (101, 102) sont respectivement activés afin de déterminer la concentration absolue du gaz à détecter à partir du rapport $R = (U_S^1 \times U_R^2)/(U_S^2 \times U_R^1)$ entre les quatre signaux où $U_S^1$ et $U_S^2$ représentent respectivement les signaux délivrés par les premier et deuxième moyens de détection (103, 104) lorsque le premier moyen d'émission (101) est activé et $U_R^1$ et $U_R^2$ représentent respectivement les signaux délivrés par les premier et deuxième moyens de détection (103, 104) lorsque le deuxième moyen d'émission (102) est activé.

FIG.1

EP 1 160 565 A1

**Description**

La présente invention a pour objet un procédé et un dispositif portable de détection de gaz par absorption sélective d'une radiation électromagnétique pour la détection de la présence d'un gaz particulier au sein d'un mélange gazeux.

Les détecteurs de fuite de gaz sont caractérisés par trois propriétés, à savoir la sélectivité, c'est-à-dire la capacité à discerner un gaz particulier parmi un ensemble de gaz présents dans une atmosphère, la sensibilité, c'est-à-dire la quantité minimale de gaz pouvant être détectée, et la stabilité, c'est-à-dire une insensibilité aux variations de condition climatiques qui permet d'assurer la pérennité des performances quelles que soient les conditions climatiques.

On connaît déjà divers types de détecteurs d'un gaz particulier tel que le méthane, dans une atmosphère constituée d'un mélange gazeux.

Ainsi, il existe des détecteurs à semi-conducteur avec lesquels un gaz combustible réagit au contact du semi-conducteur en modifiant de façon réversible la résistance électrique du semi-conducteur, qu'il est très facile de mesurer . Un tel type de capteur est bon marché et surtout utilisé pour la détection à usage domestique. Les performances ainsi que la stabilité dans le temps sont moyennes, mais la sélectivité est nulle.

Des détecteurs catalytique pouvant être utilisés pour détecter la présence par exemple de méthane équipent des appareils de détection dont la gamme de mesure varie de quelques centaine de ppm à quelques pour cent en volume de méthane. Bien que la stabilité de ces détecteurs soit correcte, leur sélectivité est très faible.

Des détecteurs à conductivité thermique utilisent la capacité d'un gaz à évacuer de la chaleur. La présence d'un gaz tel que le méthane engendre une variation de conductivité thermique qui est mesurée. De tels appareils ne sont pas sélectifs et ne sont pas adaptés à la mesure de faibles concentrations de gaz, par exemple moins de 1%, en volume de méthane.

Des appareils à ionisation de flamme utilisent le fait que les flammes d'hydrocarbures sont conductrices d'électricité. La présence d'un hydrocarbure tel que le méthane modifie la conductivité de la flamme d'hydrogène entre deux électrodes. La sensibilité est bonne avec des temps de réponse courts. Ainsi ce type d'appareils permet de mesurer de 1 ppm à plusieurs centaines de ppm avec une bonne stabilité. En revanche la sélectivité est nulle.

Des détecteurs optique à infrarouge connus présentent des performances moyennes en termes de sensibilité et de sélectivité.

On connaît différents types de détecteurs de gaz du type infrarouge non dispersifs (NDIR). Toutefois, la plupart des analyseurs de gaz utilisant les techniques standard du type infrarouge non dispersif perdent leur efficacité lorsque les gaz à détecter et mesurer présentent des bandes d'absorption non spécifiques ou se chevauchant dans le domaine infrarouge.

Le schéma d'un exemple d'analyseur de gaz de type optique décrit dans le brevet US 4914 719 est représenté sur les fig. 3 et 3A.

Dans un tel exemple de réalisation, une source 10 de rayonnement infrarouge alimentée en courant alternatif produit un faisceau de rayonnement infrarouge qui traverse une chambre 14 contenant un échantillon de mélange gazeux et arrive sur un séparateur de faisceau 12. Le séparateur de faisceau 12 dirige une partie du rayonnement incident vers une roue 16 portant des filtres et la partie du rayonnement infrarouge qui traverse la roue 16 portant les filtres 22, 24, 26 est captée par un détecteur photosensible 20.

Un moteur pas à pas 18 entraîne en rotation la roue 16 pour positionner tour à tour les différents filtres 22, 24, 26 entre le séparateur de faisceau 12 et le détecteur 20. La partie du rayonnement infrarouge qui traverse le séparateur de faisceau 12 passe d'abord à travers un filtre interférentiel 30 puis est captée par un détecteur photosensible 28.

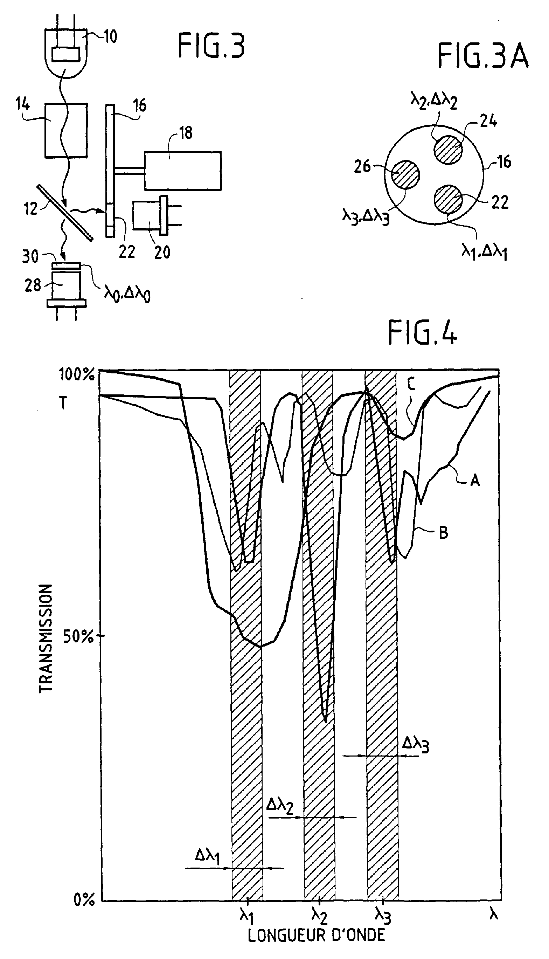

La fig. 4 montre à titre d'exemple les courbes représentant le spectre de la transmission en fonction de la longueur d'onde pour trois gaz A, B et C présentant des bandes d'absorption qui se chevauchent. On peut noter qu'une technique standard de détection de gaz à infrarouge de type non dispersif, qui utiliserait un filtre passe-bande centré sur la longueur d'onde $\lambda$, et présentant une largeur égale à $\Delta\lambda$, à la moitié du maximum, comme illustré dans la zone grisée de la fig. 4, ne permet pas d'effectuer une discrimination entre les trois gaz A, B, C dans la mesure où les trois gaz A, B, C présentent des bandes d'absorption variables dans cette zone spectrale. En effet, dans la mesure où une technique standard ne permet de réaliser qu'une seule mesure de transmission, on ne peut disposer que d'une équation à trois inconnues (trois concentrations de gaz).

Le dispositif des fig. 3 et 3A permet de remédier à ce problème en disposant sur la roue 16, trois filtres passe bande 22, 24, 26 à bandes étroites centrées sur les longueurs d'onde $\lambda_1$, $\lambda_2$ et $\lambda_3$ avec des largeurs $\Delta\lambda_1$, $\Delta\lambda_2$ et $\Delta\lambda_3$ respectivement, ce qui permet d'obtenir un jeu de trois équations. Dans ce cas, le filtre 30 est lui même choisi de manière à correspondre à un faisceau de référence centré sur la longueur d'onde $\lambda_0$ qui est proche des longueurs caractéristiques d'absorption des gaz présents dans la chambre 14, mais ne se chevauche pas avec ces longueurs d'onde caractéristiques d'absorption.

Le dispositif connu des fig. 3 et 3A fournit ainsi un ensemble de quatre signaux de mesure qui peuvent être utilisés pour détecter la concentration de trois gaz différents. Ce dispositif est adaptable à la détection de la concentration de N gaz, à condition de choisir N filtres 22, 24, 26 centrés sur des longueurs d'onde différentes.

Un tel dispositif connu par le brevet US 4 917 719, bien qu'il permette la détection simultanée de plusieurs gaz, n'est pas adapté à la détection simple et rapide d'un gaz particulier à l'aide d'un appareil portable. En effet, le dispositif décrit ci-dessus en référence aux fig. 3 et 3A comporte des éléments mobiles, tels que le disque tournant 16, qui conduisent à accroître le poids et l'encombrement du dispositif ainsi que l'énergie consommée par celui-ci, tout en rendant ce dispositif relativement fragile, notamment en cas de vibrations. De plus, un tel dispositif n'est envisageable qu'à condition de connaître au préalable la composition du mélange gazeux à analyser et il nécessite un étalonnage pour chaque gaz dont la concentration est à déterminer au sein du mélange gazeux.

On connaît encore d'autres exemples d'analyseurs de gaz du type non dispersif à infrarouge et mettant en oeuvre une technique de corrélation de filtre gazeux (GFC). De tels analyseurs de gaz sont décrits par exemple, dans l'ouvrage intitulé "Techniques and Mechanisms in Gas Sensing" de P.T. Moseley, J.O.W. Norris et D.E. Williams, édité par Adam Hilger, Bristol, Philadelphie et New York.

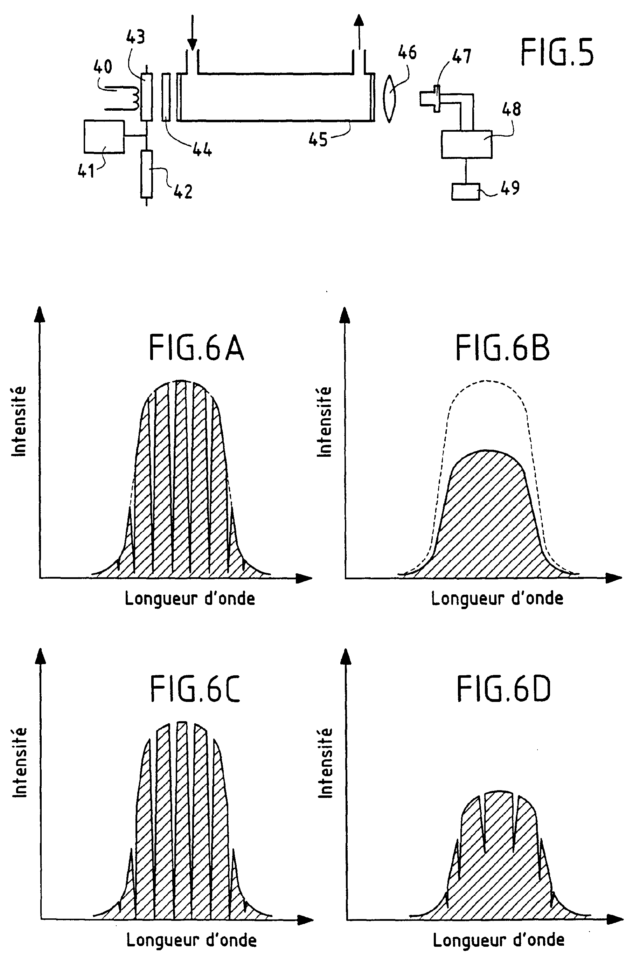

Selon cette technique, on utilise le gaz à mesurer en concentration élevée en tant que filtre pour le rayonnement infrarouge qui traverse la chambre de l'analyseur de gaz remplie du mélange gazeux à analyser. Les composants de base d'un analyseur de gaz utilisant cette technique GFC et destiné à mesurer le monoxyde de carbone ambiant CO sont représentés sur la fig.5.

Le rayonnement infrarouge émis par une source 40 est haché et traverse ensuite un filtre gazeux qui comprend en alternance un filtre gazeux de référence 42 contenant de façon concentrée un gaz de même nature que celui devant ensuite être détecté dans le mélange gazeux (tel que du monoxyde de carbone) et un filtre gazeux de mesure 43 contenant dans l'exemple considéré de l'azote. Les filtres gazeux 42 et 43 passent en alternance devant la source 40 dans la mesure où ils sont disposés sur un support entraîné en rotation par un moteur 41 définissant le découpage du faisceau issu de la source 40. Le faisceau de rayonnement ayant traversé le dispositif de filtrage gazeux 42, 43 peut traverser un filtre passe-bande additionnel 44 et pénètre dans une chambre 45 contenant le mélange gazeux et dans laquelle se produit une absorption par les gaz du mélange gazeux. Le faisceau infrarouge ayant traversé la chambre 45 parvient sur un détecteur photosensible 47 après avoir traversé un système optique 46 de focalisation et comprenant également un filtre interférentiel à bande passante étroite. Le détecteur 47 est associé à des circuits de traitement électronique 48 et un dispositif d'affichage 49.

Si la chambre 45 ne contient pas de gaz provoquant une absorption infrarouge et si le rayonnement issu de la source $\lambda_0$ traverse le filtre à CO 42, le spectre de l'intensité lumineuse reçue par le détecteur 47 en fonction de la longueur d'onde se présente sous la forme représentée sur la fig. 6A. L'enveloppe de la courbe en pointillés est due à la présence du filtre à bande étroite, tandis que les creux sont dus aux raies individuelles dans le spectre d'absorption de CO. La zone en noir correspond à l'énergie totale contenue dans le faisceau. Le filtre à CO a éliminé tout le rayonnement susceptible d'être absorbé par le CO de telle sorte que du CO présent dans la chambre 45 ne peut pas réduire plus l'énergie de ce faisceau. Toutefois, d'autres gaz présents dans la chambre 45 et présentant des recouvrements de spectres d'absorption avec celui du CO, peuvent absorber de l'énergie du faisceau infrarouge. Le filtre à CO 42 sert à produire un faisceau de référence.

En revanche, lorsque le faisceau infrarouge traverse le filtre à azote 43, il ne se produit aucune absorption par l'azote et, en l'absence de gaz absorbant dans la chambre 45, le spectre du signal arrivant sur le détecteur 47 se présente sous la forme représentée en pointillés sur la fig. 6B, cette forme étant due à la présence d'un filtre passe-bande. Un équilibrage appliqué entre le faisceau de mesure ayant traversé le filtre à azote 43 et le faisceau de référence ayant traversé le filtre à monoxyde de carbone 42, peut être réalisé par exemple à l'aide d'un filtre de densité neutre. Dans le cas où la chambre 45 ne contient pas de gaz absorbant, les énergies équilibrées des faisceaux ayant traversé les filtres 42 et 43 conduisent à la détection d'un signal de différence nul.

Dans le cas où la chambre 45 contient un mélange gazeux avec du monoxyde de carbone, ce monoxyde de carbone ne peut pas absorber de rayonnement dans le faisceau de référence mais peut absorber du rayonnement dans le faisceau de mesure, ce qui conduit aux spectres représentés respectivement sur les fig.6C et 6D. La différence d'énergie entre les faisceaux de référence et de mesure à la sortie de la chambre 45 conduit à l'émission d'un signal de sortie qui représente la concentration en CO dans la chambre 45.

L'absorption d'un gaz interférant présent dans la cellule de mesure 45 donne avec le dispositif de la figure 5 un signal de sortie positif pour les régions du spectre du gaz interférant pour lesquelles il y a recouvrement avec les raies d'absorption du CO, et un signal de sortie négatif pour les régions du spectre du gaz interférant pour lesquelles il n'y a pas de recouvrement avec les raies d'absorption du CO.

En cas de présence d'un gaz interférant, il existe ainsi un faible signal de sortie résiduel dont le signe et l'amplitude dépendent de l'échantillon et du recouvrement des spectres d'absorption entre le gaz à mesurer (CO) et le gaz interférant.

Il apparaît qu'une technique de mesure telle que celle exposée dans l'ouvrage précité assure une suppression plus efficace de l'influence des gaz interférants que les dispositifs décrits dans le brevet US 4 914 719 et en outre ne nécessitent pas d'étalonnage pour chaque gaz spécifique.

Toutefois, les dispositifs décrits dans l'ouvrage précité mettent également en oeuvre des éléments mobiles tels que la roue tournante de support des cellules de gaz formant filtres et de tels dispositifs ne peuvent pas être réalisés sous une forme à la fois compacte, robuste et économe en énergie.

La présente invention vise à remédier aux inconvénients précités et à permettre la réalisation de détecteurs de gaz présentant à la fois une excellente sensibilité à un gaz prédéterminé, une grande sélectivité vis à vis de ce gaz prédéterminé, une bonne robustesse aux chocs, un faible poids et une grande compacité autorisant une réalisation sous une forme portable et à un coût réduit, tout en ne nécessitant pas de maintenance particulière.

L'invention vise encore à réaliser un détecteur de gaz présentant une bonne stabilité vis à vis des variations thermiques.

Ces buts sont atteints grâce à un dispositif portable de détection de gaz par absorption sélective d'une radiation électromagnétique pour la détection de la présence d'un gaz particulier au sein d'un mélange gazeux, caractérisé en ce qu'il comprend :

a) un premier moyen d'émission d'un faisceau de rayonnement électromagnétique infrarouge de mesure dans une bande de longueur d'onde comprenant une longueur d'onde pour laquelle le gaz à détecter présente une caractéristique d'absorption,

b) un deuxième moyen d'émission d'un faisceau de rayonnement électromagnétique infrarouge de référence, ces premier et deuxième moyens d'émission d'un faisceau de rayonnement électromagnétique étant activés alternativement,

c) une cellule de mesure contenant le mélange gazeux à analyser, laquelle cellule de mesure comprend des sections d'entrée et de sortie et reçoit au moins une partie du faisceau de mesure à travers sa section d'entrée,

d) une cellule de filtrage contenant un échantillon du gaz à détecter et comprenant des sections d'entrée et de sortie, successivement traversées par au moins une partie du faisceau de référence,

e) un premier moyen de détection des faisceaux de rayonnement électromagnétique,

f) un deuxième moyen de détection des faisceaux de rayonnement électromagnétique,

g) un séparateur de faisceaux disposé de manière à séparer d'une part le faisceau de mesure et d'autre part le faisceau de référence et de manière à transmettre une première partie de chacun des faisceaux de mesure et de référence audit premier moyen de détection de faisceaux de rayonnement électromagnétique, et une deuxième partie de chacun des faisceaux de mesure et de référence au deuxième moyen de détection des faisceaux de rayonnement électromagnétique et,

h) des moyens d'acquisition synchrone de traitement des quatre signaux ($U_{MS}^1$, $U_S^1$, $U_R^1$, $U_R^2$) délivrés par les premier et deuxième moyens de détection successivement lorsque les premier et deuxième moyens d'émission sont respectivement activés afin de déterminer la concentration absolue du gaz à détecter à partir du rapport $R = (U_S^1 \times U_R^2) \div (U_S^2 \times U_R^1)$ entre lesdits quatre signaux où $U_S^1$ et $U_S^2$ représentent respectivement les signaux délivrés par les premier et deuxième moyens de détection lorsque le premier moyen d'émission est activé et $U_R^1$ et $U_R^2$ représentent respectivement les signaux délivrés par les premier et deuxième moyens de détection lorsque le deuxième moyen d'émission est activé.

Selon un premier mode de réalisation, la cellule de filtrage contenant un échantillon de gaz à détecter comprend des sections d'entrée et de sortie successivement traversées par l'intégralité du faisceau de référence ; le séparateur de faisceaux est disposé de manière à transmettre la première partie de chacun des faisceaux de mesure et de référence audit premier moyen de détection de faisceaux de rayonnement électromagnétique à travers les sections d'entrée et de sortie de la cellule de mesure et, le deuxième moyen de détection des faisceaux de rayonnement électromagnétique est disposé de manière à recevoir directement la deuxième partie des faisceaux de mesure et de référence, le séparateur de faisceaux étant agencé de manière à recevoir le faisceau de référence après passage de celui-ci à travers la section de sortie de la cellule de filtrage.

Selon un autre mode de réalisation, la cellule de mesure contenant le mélange gazeux à analyser comprend des sections d'entrée et de sortie successivement traversées par l'intégralité du faisceau de mesure ; le séparateur de faisceaux est disposé de manière à transmettre la première partie de chacun des faisceaux de mesure et de référence directement audit premier moyen de détection de faisceaux de rayonnement électromagnétique et, le deuxième moyen de détection des faisceaux de rayonnement électromagnétique est disposé de manière à recevoir la deuxième partie des faisceaux de mesure et de référence à travers les sections d'entrée et de sortie de la cellule de filtrage, le séparateur de faisceaux étant agencé de manière à recevoir le faisceau de mesure après passage de celui-ci à travers la section de sortie de la cellule de mesure.

Le dispositif selon l'invention comprend en outre des moyens de mesure de la température du milieu dans lequel sont placés les éléments constitutifs du dispositif et les signaux délivrés par ces moyens de mesure de la température sont appliqués aux moyens de traitement de signaux assurant la détermination de la concentration absolue du gaz à détecter.

Les premier et deuxième moyens d'émission d'un faisceau de rayonnement électromagnétique peuvent comprendre des diodes électroluminescentes ou encore des diodes laser ou des lasers solides.

Des moyens de modulation et de filtrage sont associés aux moyens d'émission d'un faisceau de rayonnement électromagnétique. Les moyens de modulation sont synchronisés de telle sorte que les premier et deuxième moyens d'émission d'un faisceau de rayonnement électromagnétique émettent un rayonnement à tour de rôle. Les sections d'entrée et de sortie de la cellule de mesure peuvent être situées du même côté de la cellule de mesure ou sur des côtés opposés.

Les premier et deuxième moyens d'émission d'un faisceau de rayonnement électromagnétique peuvent présenter des spectres d'émission voisins ou différents.

L'invention concerne également un procédé de détection d'un gaz par absorption sélective d'une radiation électromagnétique pour la détection de la présence d'un gaz particulier au sein d'un mélange gazeux, caractérisé en ce qu'il comprend les étapes suivantes :

a) émettre un faisceau de rayonnement électromagnétique infrarouge de mesure dans une bande de longueurs d'onde comprenant une longueur d'onde pour laquelle le gaz à détecter présente une caractéristique d'absorption,

b) émettre un faisceau de rayonnement électromagnétique infrarouge de référence,

c) moduler de façon synchronisée l'émission des faisceaux de mesure et de référence de telle manière que des impulsions du faisceau de mesure alternent dans le temps avec des impulsions du faisceau de référence,

d) faire passer au moins une partie du faisceau de mesure à travers une cellule de mesure contenant le mélange gazeux,

e) faire passer au moins une partie du faisceau de référence à travers une cellule de filtrage contenant un échantillon du gaz à détecter,

f) séparer en des première et deuxième parties, le faisceau de référence et le faisceau de mesure,

g) mesurer l'énergie des premières parties des faisceaux de mesure et de référence,

h) mesurer l'énergie des deuxième parties des faisceaux de mesure et de référence et,

i) déterminer la concentration absolue du gaz à détecter en exploitant les quatre signaux ($U_S^1$, $U_S^2$, $U_R^1$, $U_R^2$) de mesure de l'énergie des première et deuxième parties des faisceaux de mesure et de référence délivrés successivement lorsque des impulsions des faisceaux de mesure et de référence sont respectivement émises, à partir du rapport $R = (U_S^1 \times U_R^2)/(U_S^2 \times U_R^1)$ (entre lesdits quatre signaux où $U_S^1$ et $U_S^2$ représentent respectivement les signaux de mesure de l'énergie des première et deuxième parties des faisceaux de mesure et de référence lorsque des impulsions du faisceau de mesure sont émise et $U_R^1$ et $U_R^2$ représentent respectivement les signaux de mesure de l'énergie des première et deuxième parties des faisceaux de mesure et de référence lorsque des impulsions du faisceau de référence sont émises.

On mesure en outre la température du milieu dans lequel se propagent les faisceaux de mesure et de référence et l'on corrige la valeur déterminée de la concentration absolue du gaz à détecter, en fonction de la température mesurée.

Selon un mode particulier de réalisation, on fait passer l'intégralité du faisceau de référence à travers la cellule de filtrage contenant un échantillon du gaz à détecter ; on effectue ladite séparation sur le faisceau de mesure et le faisceau de référence après passage de ce dernier à travers la cellule de filtrage et, on mesure l'énergie des premières parties des faisceaux de mesure et de référence après passage de ces premières parties à travers la cellule de mesure contenant le mélange gazeux.

Selon un autre mode particulier de réalisation, on fait passer l'intégralité du faisceau de mesure à travers la cellule de mesure contenant le mélange gazeux ; on effectue ladite séparation sur le faisceau de référence et le faisceau de mesure après passage de ce dernier à travers la cellule de mesure et, on mesure l'énergie des deuxièmes parties des faisceaux de mesure et de référence après passage de ces deuxièmes parties à travers la cellule de filtrage contenant un échantillon du gaz à détecter.

Le procédé et le dispositif portable selon l'invention sont en particulier applicables à la détection de méthane, avec une sensibilité pouvant être par exemple de l'ordre de 1ppm et une très grande sélectivité en utilisant un rayonnement électromagnétique infrarouge.

Les dispositifs selon l'invention peuvent ainsi être avantageusement utilisés à la place d'appareils à ionisation de flamme qui présentent l'inconvénient en particulier d'avoir une sélectivité nulle et de nécessiter pour leur fonctionnement des bouteilles de gaz de mélange azote et hydrogène, tandis que les dispositifs selon l'invention impliquent une maintenance quasi nulle. Par ailleurs, l'absence de composants en mouvement ou impliquant une forte consommation d'énergie, tels que des moteurs électriques, permet selon l'invention la réalisation de détecteurs portable compacts, robustes et autonomes.

D'autres caractéristiques et avantages de l'invention ressortiront de la description suivante de modes particuliers de réalisation donnés à titre d'exemples en référence aux dessins annexés sur lesquels :

- la fig.1 est une vue schématique d'un premier exemple de réalisation d'un détecteur de gaz selon la présente invention,
- la fig. 2 est une vue schématique d'un deuxième exemple de réalisation d'un détecteur de gaz selon la présente invention,
- la fig. 3 est une vue schématique d'un premier exemple d'analyseur de gaz connu de l'art antérieur,
- la fig. 3A est une vue de détail de l'analyseur de gaz de la fig.3,
- la fig. 4 est un diagramme spectral donnant la transmission en fonction de la longueur d'onde pour trois gaz analysés à l'aide de l'analyseur de gaz selon les fig.3 et 3A,
- la fig. 5 est une vue schématique d'un deuxième exemple d'analyseur de gaz connu de l'art antérieur et,
- les fig. 6A à 6D sont un ensemble de diagrammes spectraux donnant l'intensité lumineuse en fonction de la longueur d'onde dans différents cas de fonctionnement de l'analyseur de gaz de la fig. 5.

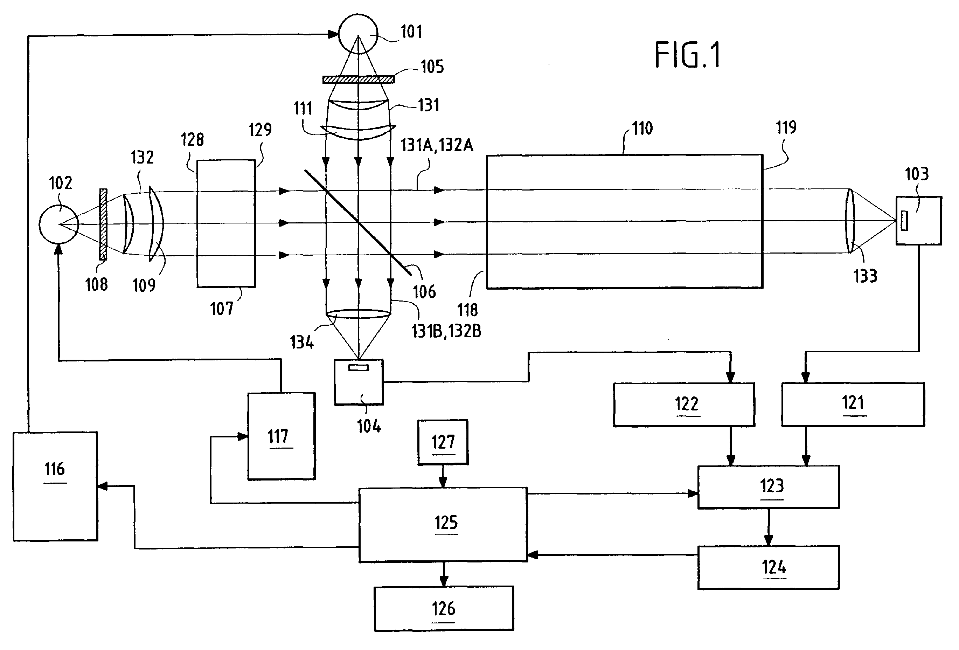

Si l'on considère en premier lieu la fig. 1, on voit le système optique d'un premier exemple de détecteur de gaz selon l'invention, destiné à détecter et mesurer la concentration d'un gaz prédéterminé présent dans un mélange gazeux au sein duquel se trouvent plusieurs gaz ayant des spectres d'absorption optique qui se chevauchent.

Une première source de rayonnement 101, telle qu'une diode électroluminescente, fournit un faisceau de mesure 131 qui traverse un filtre passe bande 105 à bande étroite qui couvre un domaine spectral dans lequel se situent des raies d'absorption du gaz à mesurer. Ce dernier faisceau 131 traverse ensuite la lentille 111 afin de collimater le faisceau vers un séparateur de faisceau 106.

Une seconde source de rayonnement 102, telle qu'une diode électroluminescente, fournit un faisceau de référence 132 qui traverse un filtre passe bande 108 à bande étroite qui couvre un domaine spectral dans lequel se situent des raies d'absorption du gaz à mesurer. Ce dernier faisceau 132 traverse ensuite la lentille 109 afin de collimater le faisceau vers une cellule de filtrage 107 contenant le gaz à détecter.

La cellule de filtrage 107 ou cellule à corrélation de gaz contient le gaz prédéterminé à détecter, avec une concentration élevée et constitue un filtre optique gazeux dont la signature est celle du spectre d'absorption du gaz à détecter. Le faisceau 132 arrive sur une face frontale en matériau transparent, de la cellule de filtrage 107 laquelle face frontale constitue une fenêtre d'entrée 128 et ressort par une face frontale opposée, également en matériau transparent, de la cellule de filtrage 107, laquelle face frontale opposée constitue une fenêtre de sortie 129.

Le faisceau 131 après passage à travers la lentille 111 vient sur un séparateur de faisceau 106 pouvant être constitué par une simple plaque semi transparente qui réfléchit une partie 131A du faisceau de mesure 131 et transmet une partie 131B de ce même faisceau.

Le faisceau 132 après passage à travers la face de sortie 129 de la cellule de filtrage 107 vient sur le séparateur de faisceau 106 qui transmet une partie 132A du faisceau de référence 132 et réfléchit une partie 132B de ce même faisceau.

Les faisceaux 131A et 132A sont appliqués à travers une section d'entrée 118 à une cellule de mesure 110 adaptée pour contenir le mélange gazeux à analyser. Les faisceaux 131A et 132A ressortent de la cellule de mesure 110 à travers une section de sortie 119 vers une lentille de focalisation 133 pour venir converger vers un premier photodétecteur 103.

Les faisceaux 131B et 132B sont transmis à travers une lentille de focalisation 134 pour venir converger vers un deuxième photodétecteur 104.

Les sources de rayonnement 101 et 102 sont associées à des moyens de modulation synchronisés 116 et 117 de manière à fournir à tour de rôle des faisceaux de lumière impulsionnels 131 et 132.

Le dispositif de la fig. 1 donne lieu à quatre signaux de sortie sur les photodétecteurs 103, 104.

Une impulsion de la source 101 (faisceau de mesure 131) donne lieu à un signal de sortie $U_S^1$ sur le photodétecteur 103 et un signal de sortie $U_S^2$ sur le photodétecteur 104.

Une impulsion de la source 102 (faisceau de référence 132) donne lieu à un signal de sortie $U_R^1$ sur le photodétecteur 103 et à un signal de sortie $U_R^2$ sur le photodétecteur 104.

Si la cellule de mesure 110 contient le mélange gazeux avec le gaz à détecter, les signaux $U_S^1$, $U_S^2$, $U_R^1$ et $U_R^2$ correspondent respectivement aux signaux représentés sur les fig. 6D, 6B, 6C, et 6A.

Conformément aux techniques de corrélation par filtre gazeux, la concentration du gaz détecté peut être déterminée par le rapport $U_S^1/U_R^1$, c'est-à-dire par les signaux de sortie du photodétecteur 103.

Ce rapport $U_S^1 / U_R^1$, est cependant susceptible de varier non seulement du fait de la présence du gaz à détecter au sein de la cellule de mesure 110, mais aussi à cause d'autres facteurs indésirables tels que l'influence de la température ou la dégradation des sources 101 et 102.

C'est pour éviter ces inconvénients que le second photodétecteur 104 est introduit dans le système optique de telle manière que le faisceau de mesure 131 et le faisceau de référence 132 frappent le photodétecteur 104 sans avoir traversé la cellule de mesure 110.

Dans ce cas, les signaux $U_S^2$ et $U_R^2$ ne dépendent pas de la concentration du gaz à mesurer.

Le rapport $R = (U_S^1 \times U_R^2)/(U_S^2 \times \times U_R^1)$ est indépendant de la sensibilité des photodétecteurs et de l'intensité des sources. Il peut être représenté comme le produit de deux rapports $R_1 \times R_2 = (U_S^1/U_R^1) \times (U_R^2/U_S^2)$. Chacun de ces rapports $R_1$, $R_2$ représente un signal provenant du même photodétecteur ; ces rapports $R_1$, $R_2$ sont donc indépendants de la sensibilité des photodétecteurs. Le rapport $R$ peut aussi être représenté comme le produit de deux autres rapports $R_S \times R_R = (U_S^1/U_S^2) \times (U_R^2/U_R^1)$. Les signaux de chacun des rapports $R_S$, $R_R$ sont produits par la même source de lumière ; les rapports $R_S$, $R_R$ sont donc indépendants de l'intensité de la source de lumière.

Les références 116 et 117 désignent les circuits d'alimentation électrique des sources de rayonnement 101 et 102. Les circuits 116, 117 comprennent des générateurs d'impulsions synchronisés de telle sorte que les diodes électroluminescentes 101 et 102 délivrent en alternance des faisceaux lumineux impulsionnels.

Des moyens 121 à 126 sont prévus pour assurer l'acquisition synchrone et le traitement des quatre signaux délivrés successivement lorsque les moyens d'émission 101 puis 102 sont respectivement activés par les moyens de détection 103 et 104 afin de déterminer la concentration absolue du gaz à détecter.

Les photodétecteurs 103 et 104 délivrent des signaux électriques proportionnels à l'intensité lumineuse reçue. Ces signaux sont appliqués à des amplificateurs 121, 122 dont les sorties sont reliées à un multiplexeur 123 lui-même connecté, par l'intermédiaire d'un convertisseur analogique numérique 124, à un microprocesseur 125 qui assure la synchronisation des modulateurs 116, 117 et du multiplexeur 123. Le microprocesseur 125 assure par ailleurs le calcul de la concentration de gaz à mesurer en tenant compte de la valeur de la température fournie par le détecteur de température 127 qui peut être par exemple, une thermistance. Cette mesure de température peut également être effectuée par la mesure de la résistance d'obscurité d'un des photodétecteurs 103, 104. La valeur de concentration calculée peut être affichée sur un écran 126.

L'algorithme de compensation en température est décrit en détail dans le document de brevet FR-A-2772127 intitulé : "Procédé de détermination de la concentration d'un gaz dans un mélange gazeux et dispositif d'analyse pour la mise en oeuvre d'un tel procédé".

On indiquera cependant ci-dessous à titre d'exemple le principe d'un tel algorithme de compensation en température utilisable dans le cadre de la présente invention.

Ce principe de mesure repose sur une phase d'étalonnage qui permet d'établir deux tables de compensation en température et une table donnant la correspondance entre le signal mesuré et la concentration. Ces trois tables sont ensuite stockées dans l'appareil et permettent la mesure de concentration dans toutes les conditions de température correspondant à la gamme de l'étalonnage.

La phase d'étalonnage comprend les étapes suivantes :

- On enregistre le signal $U_0^*(t)$ mesuré par l'appareil à concentration nulle en fonction de la température t :

$$\boxed{U_0^*(t)} \quad \text{[table a]}$$

- On mesure le signal $U_{N0}(t)$ à une concentration fixe $N_0$ du gaz à mesurer en fonction de la température t. On enregistre ensuite la transmittance normalisée $T_{N0}^*(t)$ définie ainsi :

$$\boxed{T_{N0}^*(t) = \frac{U_{N0}(t)}{U_0^*(t)}} \quad \text{[table b]}$$

- On mesure enfin le signal $U_{t0}(N)$ en fonction de la concentration du gaz à mesurer à une température fixe $t_0$. On enregistre ensuite la transmittance normalisée définie ainsi :

$$\boxed{T_{t0}^*(N) = \frac{U_{t0}(N)}{U_{t0}(0)}} \quad \text{[table c]}$$

La mesure de concentration comprend les étapes suivantes :

- L'appareil mesure le signal $U(N,t)$ et la température t.

- On calcule alors la transmittance normalisée à partir de la [table a]

$$T(N,t) = \frac{U(N,t)}{U_0^*(t)} \quad (1)$$

- On ramène ensuite cette valeur de transmittance normalisée à la température $t_0$ (à laquelle l'étalonnage en concentration a été effectué) en utilisant la formule de compensation en température du document de brevet FR-A-2772127 et la table b.

$$T(N,t_0) = T(N,t) \frac{\ln(T_{N0}^*(t_0))}{\ln(T_{N0}^*(t))} \quad (2)$$

ou sa version simplifiée obtenue par développement limité de la précédente formule

$$T(N,t_0) = 1 - (1 - T(N,t)) \frac{1 - T_{N0}^*(t_0)}{1 - T_{N0}^*(t)} \quad (3)$$

- On détermine ensuite la concentration mesurée à partir de la table c qui lie la concentration N et la transmittance normalisée T à la température $t_0$.

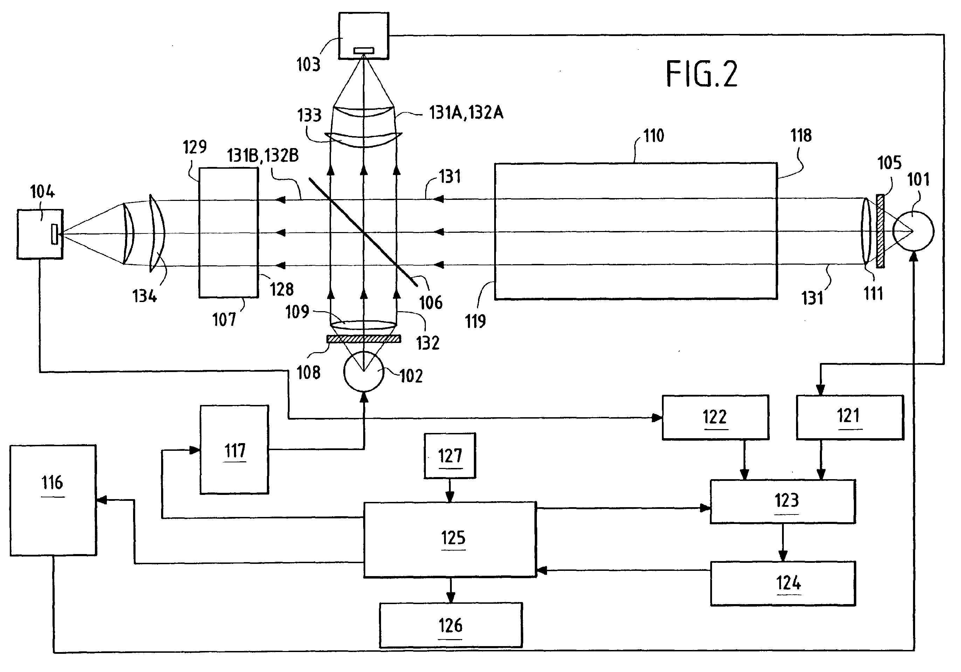

La fig. 2 montre un autre exemple de réalisation de détecteur de gaz selon l'invention, dans lequel on a représenté schématiquement les fonctions essentielles des circuits de traitement électronique qui sont associés au système optique de détection. On note que l'on passe de la figure 1 à la figure 2 en échangeant la position de la cellule de mesure 110 avec la cellule de référence 107.

Sur la fig. 2, les éléments correspondant à ceux de la fig. 1 portent les mêmes numéros de référence et ne sont pas décrits à nouveau en détail.

A titre de variante, on voit sur la fig. 2 que le faisceau de mesure 131 émis par la source de rayonnement 101 traverse un filtre passe-bande 105 à bande étroite qui couvre un domaine spectral dans lequel se situent des raies d'absorption du gaz à mesurer.

Le faisceau de mesure 131 est appliqué à travers la section d'entrée 118 à la cellule de mesure 110. Le faisceau de mesure 131 ressort de la cellule de mesure 110 à travers la section de sortie 119.

Le faisceau 131 est collimaté au voisinage de la section d'entrée 118 à l'aide d'une lentille 111. Le faisceau 131 après passage à travers la section de sortie 119 vient sur le séparateur de faisceaux 106 qui réfléchit une partie 131A du faisceau de mesure 131 vers le premier photodétecteur 103 ; et transmet une partie 131B du faisceau de mesure 131 à travers la cellule de référence 107 pour venir converger via une lentille 134 sur un deuxième photodétecteur 104.

La cellule de référence 107 ou cellule à corrélation de gaz contient le gaz prédéterminé à détecter, avec une concentration élevée et constitue un filtre optique gazeux dont la signature est celle du spectre d'absorption du gaz à détecter.

La partie 131B du faisceau 131 arrive sur la fenêtre d'entrée 128 et ressort par la fenêtre de sortie 129 de la cellule de référence 107.

La deuxième source de rayonnement 102 émet un faisceau de référence 132 qui vient frapper directement le séparateur de faisceaux 106, sans traverser la cellule de mesure 110, et qui est divisé au niveau du séparateur de faisceaux 106 en une première partie 132A qui traverse le séparateur 106 pour venir converger via la lentille 133 sur le premier photodétecteur 103, et en une deuxième partie 132B qui est réfléchie par le séparateur 106 pour venir converger via la lentille 134 sur le deuxième photodétecteur 104 après avoir traversé la cellule de filtrage 107 comme la deuxième partie 131B du faisceau de mesure 131.

Les signaux reçus sur chacun des photodétecteurs 103 et 104 sont analogues à ceux reçus par ces mêmes photodétecteurs dans le dispositif de la figure 1. Le traitement appliqué à ces signaux est également similaire au dispositif de la figure 1 décrit précédemment.

Par ailleurs, un détecteur de température 127 est disposé au voisinage des éléments constitutifs du dispositif de détection, à l'extérieur de la cellule de mesure 110. En effet, lorsque l'on calcule la concentration d'un gaz par des mesures d'absorption optique, il est nécessaire de prendre en compte la température du gaz à analyser parce que son spectre dépend de la température.

Les modes de réalisation décrits en référence aux fig. 1 et 2 peuvent faire l'objet de diverses variantes. En particulier, la cellule de mesure 110 au sein de laquelle se produit l'interaction entre la lumière et le milieu gazeux à analyser peut présenter différents nombres de trajets du faisceau optique selon les applications. A titre de variante, avec un nombre de trajets pair du faisceau optique, les sections d'entrée et de sortie de la cellule de mesure 110 peuvent être situées sur un même côté de la cellule de mesure 110.

La cellule de mesure 110 peut constituer une enceinte fermée avec des entrées et des sorties pour le milieu gazeux à analyser. La cellule de mesure 110 peut également constituer une cellule ouverte en communication avec un environnement extérieur, mais néanmoins séparée de la partie incorporant les sources de rayonnement 101, 102, les photodétecteurs 103, 104, la cellule de corrélation de gaz 107 et les circuits électroniques de traitement.

Les sources émettrices de lumière 101, 102 qui doivent couvrir les longueurs d'onde des raies d'absorption du gaz à détecter peuvent émettre dans tout le spectre optique allant de l'infrarouge à l'ultraviolet.

Pour un gaz tel que le méthane, les longueurs d'onde d'absorption se situent dans l'infrarouge. Les sources 101, 102 seront donc, dans le cas d'un détecteur de fuites de méthane, des sources d'émission de rayonnement infrarouge. On peut utiliser pour de telles sources émettrices 101, 102, à titre d'exemple, des corps noirs (lampe à filament), des diodes électroluminescentes ou encore des lasers (diodes lasers ou lasers solides). Les diodes électroluminescentes présentent un bon rapport qualité/prix en permettant de détecter de faibles quantités de gaz de manière sélective pour un coût raisonnable.

Le méthane présente un spectre de raies d'absorption très fines et nombreuses et se trouve donc bien adapté au procédé de mesure selon l'invention, selon lequel on utilise des émetteurs de lumière 101, 102 à large bande et la cellule à corrélation de gaz 107 remplie de 100% vol. de méthane constitue un filtre optique dont la signature est celle du spectre d'absorption du méthane et permet de distinguer le méthane des autres gaz. Dans la mesure où l'on n'a pas de recouvrement complet du spectre du méthane et des spectres des autres gaz, le procédé présente une très bonne sélectivité.

Le traitement des signaux de mesure selon la présente invention repose sur l'utilisation de la multiplication de deux rapports de deux signaux, et non pas sur la différence de deux signaux, ce qui rend inutile l'usage d'un filtre compensateur de même que la régulation de la seconde source de rayonnement électromagnétique, ce qui est particulièrement important dans le contexte d'un appareil compact portable et utilisable en atmosphères explosives, puisque la consommation électrique peut être très réduite.

Dans le cas particulier d'une application au méthane, il est intéressant de ne prendre en compte qu'une partie de la bande d'absorption du méthane autour de 3,2 micromètres, afin de minimiser les autres éléments interférant comme par exemple les autres alcanes. Le fait de n'utiliser qu'une partie de la bande d'absorption plutôt que l'ensemble de la bande d'absorption du gaz à mesurer permet d'accroître la sélectivité.

Il est possible dans ce cas de choisir des diodes électroluminescentes infrarouge dont le spectre est optimisé autour de 3,2 micromètres, ce qui permet une très faible consommation n'excédant pas quelques dizaines de milliwatts.

**Revendications**

**1.** Dispositif portable de détection de gaz par absorption sélective d'une radiation électromagnétique pour la détection de la présence d'un gaz particulier au sein d'un mélange gazeux, **caractérisé en ce qu'**il comprend :

a) un premier moyen (101) d'émission d'un faisceau de rayonnement électromagnétique infrarouge de mesure (131) dans une bande de longueur d'onde comprenant une longueur d'onde pour laquelle le gaz à détecter présente une caractéristique d'absorption,
b) un deuxième moyen (102) d'émission d'un faisceau de rayonnement électromagnétique infrarouge de référence (132), ces premier et deuxième moyens (101, 102) d'émission d'un faisceau de rayonnement électromagnétique étant activés alternativement,
c) une cellule de mesure (110) contenant le mélange gazeux à analyser, laquelle cellule de mesure (110) comprend des sections d'entrée (118) et de sortie (119) et reçoit au moins une partie du faisceau de mesure (131) à travers sa section d'entrée (118),
d) une cellule de filtrage (107) contenant un échantillon du gaz à détecter et comprenant des sections d'entrée (128) et de sortie (129), successivement traversées par au moins une partie du faisceau de référence (132),
e) un premier moyen (103) de détection des faisceaux de rayonnement électromagnétique,
f) un deuxième moyen (104) de détection des faisceaux de rayonnement électromagnétique,
g) un séparateur de faisceaux (106) disposé de manière à séparer d'une part le faisceau de mesure (131) et d'autre part le faisceau de référence (132) et de manière à transmettre une première partie (131A, 132A) de chacun des faisceaux de mesure (131) et de référence (132) audit premier moyen (103) de détection de faisceaux de rayonnement électromagnétique, et une deuxième partie (131B, 132B) de chacun des faisceaux de mesure (131) et de référence (132) au deuxième moyen (104) de détection des faisceaux de rayonnement électromagnétique et,

h) des moyens (121 à 126) d'acquisition synchrone et de traitement des quatre signaux ($U_S^1$, $U_S^2$, $U_R^1$, $_R^2$) délivrés par les premier et deuxième moyens de détection (103, 104) successivement lorsque les premier et deuxième moyens d'émission (101, 102) sont respectivement activés afin de déterminer la concentration absolue du gaz à détecter à partir du rapport $R = (U_S^1 \times U_R^2)/(U_S^2 \times {}_R^2)$ entre lesdits quatre signaux où $U_S^1$ et $U_S^2$ représentent respectivement les signaux délivrés par les premier et deuxième moyens de détection (103, 104) lorsque le premier moyen d'émission (101) est activé et $U_R^1$ et $U_R^2$ représentent respectivement les signaux délivrés par les premier et deuxième moyens de détection (103, 104) lorsque le deuxième moyen d'émission (102) est activé.

2. Dispositif selon la revendication 1, **caractérisé en ce que** la cellule de filtrage (107) contenant un échantillon de gaz à détecter comprend des sections d'entrée (128) et de sortie (129) successivement traversées par l'intégralité du faisceau de référence (132), **en ce que** le séparateur de faisceaux (106) est disposé de manière à transmettre la première partie (131A, 132A) de chacun des faisceaux de mesure (131) et de référence (132) audit premier moyen (103) de détection de faisceaux de rayonnement électromagnétique à travers les sections d'entrée (118) et de sortie (119) de la cellule de mesure (110), et **en ce que** le deuxième moyen (104) de détection des faisceaux de rayonnement électromagnétique est disposé de manière à recevoir directement la deuxième partie (131B, 132B) des faisceaux de mesure (131) et de référence (132), le séparateur de faisceaux (106) étant agencé de manière à recevoir le faisceau de référence (132) après passage de celui-ci à travers la section de sortie (129) de la cellule de filtrage (107).

3. Dispositif selon la revendication 1, **caractérisé en ce que** la cellule de mesure (110) contenant le mélange gazeux à analyser comprend des sections d'entrée (118) et de sortie (119) successivement traversées par l'intégralité du faisceau de mesure (131), **en ce que** le séparateur de faisceaux (106) est disposé de manière à transmettre la première partie (131A, 132A) de chacun des faisceaux de mesure (131) et de référence (132) directement audit premier moyen (103) de détection de faisceaux de rayonnement électromagnétique, et **en ce que** le deuxième moyen (104) de détection des faisceaux de rayonnement électromagnétique est disposé de manière à recevoir la deuxième partie (131B, 132B) des faisceaux de mesure (131) et de référence (132) à travers les sections d'entrée (128) et de sortie (129) de la cellule de filtrage (107), le séparateur de faisceaux (106) étant agencé de manière à recevoir le faisceau de mesure (131) après passage de celui-ci à travers la section de sortie (119) de la cellule de mesure (110)

4. Dispositif selon l'une quelconque des revendications 1 à 3, **caractérisé en ce qu'**il comprend en outre des moyens (127) de mesure de la température du milieu dans lequel sont placés les éléments constitutifs du dispositif et **en ce que** les signaux délivrés par lesdits moyens de mesure de la température (127) sont appliqués auxdits moyens de traitement (125).

5. Dispositif selon l'une quelconque des revendications 1 à 4, **caractérisé en ce que** les premier et deuxième moyens (101, 102) d'émission d'un faisceau de rayonnement électromagnétique comprennent des diodes électroluminescentes.

6. Dispositif selon l'une quelconque des revendications 1 à 4, **caractérisé en ce que** les premier et deuxième moyens (101, 102) d'émission d'un faisceau de rayonnement électromagnétique comprennent des diodes laser ou des lasers solides.

7. Dispositif selon l'une quelconque des revendications 1 à 6, **caractérisé en ce qu'**il comprend des moyens de modulation (116, 117) associés aux moyens (101, 102) d'émission d'un faisceau de rayonnement électromagnétique, et synchronisés de telle sorte que les premier et deuxième moyens (101, 102) d'émission d'un faisceau de rayonnement électromagnétique émettent un rayonnement à tour de rôle.

8. Dispositif selon l'une quelconque des revendications 1 à 7, **caractérisé en ce qu'**il comprend des moyens de filtrage (105, 108) associés aux moyens (101, 102) d'émission d'un faisceau de rayonnement électromagnétique.

9. Dispositif selon l'une quelconque des revendications 1 à 8, **caractérisé en ce que** le séparateur de faisceaux (106) comprend une plaque semi-transparente pour transmettre en partie et réfléchir en partie le rayonnement électromagnétique.

**10.** Dispositif selon l'une quelconque des revendications 1 à 9, **caractérisé en ce que** les sections d'entrée (118) et de sortie (119) de la cellule de mesure (110) sont situées sur un même côté de ladite cellule de mesure (110).

**11.** Dispositif selon l'une quelconque des revendications 1 à 9, **caractérisé en ce que** les sections d'entrée (118) et de sortie (119) de la cellule de mesure (110) sont situées sur des côtés opposés de ladite cellule de mesure (110).

**12.** Dispositif selon l'une quelconque des revendications 1 à 11, **caractérisé en ce que** les sections d'entrée (128) et de sortie (129), de la cellule de filtrage (107) sont situées sur des faces opposées de ladite cellule de filtrage (107).

**13.** Dispositif selon l'une quelconque des revendications 1 à 12, **caractérisé en ce que** le gaz à détecter est du méthane.

**14.** Dispositif selon l'une quelconque des revendications 1 à 13, **caractérisé en ce que** les premier et deuxième moyens (101, 102) d'émission d'un faisceau de rayonnement électromagnétique présentent des spectres d'émission voisins.

**15.** Dispositif selon l'une quelconque des revendications 1 à 13, **caractérisé en ce que** les premier et deuxième moyens (101, 102) d'émission d'un faisceau de rayonnement électromagnétique présentent des spectres d'émission différents.

**16.** Procédé de détection d'un gaz par absorption sélective d'une radiation électromagnétique pour la détection de la présence d'un gaz particulier au sein d'un mélange gazeux, **caractérisé en ce qu'**il comprend les étapes suivantes :

a) émettre un faisceau de rayonnement électromagnétique infrarouge de mesure (131) dans une bande de longueurs d'onde comprenant une longueur d'onde pour laquelle le gaz à détecter présente une caractéristique d'absorption,
b) émettre un faisceau de rayonnement électromagnétique infrarouge de référence (132),
c) moduler de façon synchronisée l'émission des faisceaux de mesure (131) et de référence (132) de telle manière que des impulsions du faisceau de mesure (131) alternent dans le temps avec des impulsions du faisceau de référence (132),
d) faire passer au moins une partie du faisceau de mesure (131) à travers une cellule de mesure (110) contenant le mélange gazeux,
e) faire passer au moins une partie du faisceau de référence (132) à travers une cellule de filtrage (107) contenant un échantillon du gaz à détecter,
f) séparer en des première et deuxième parties (132A, 132B, 131A, 131B), le faisceau de référence (132) et le faisceau de mesure (131),
g) mesurer l'énergie des premières parties (131A, 132A) des faisceaux de mesure (131) et de référence (132),
h) mesurer l'énergie des deuxième parties (131B, 132B) des faisceaux de mesure (131) et de référence (132) et,
i) déterminer la concentration absolue du gaz à détecter en exploitant les quatre signaux ($U_S^1$, $U_S^2$, $U_R^1$, $U_R^2$) de mesure de l'énergie des première et deuxième parties des faisceaux de mesure (131) et de référence (132) délivrés successivement lorsque des impulsions des faisceaux de mesure (131) et de référence (132) sont respectivement émises, à partir du rapport $R = (U_S^1 \times U_R^2)/(U_S^2 \times U_R^1)$ entre lesdits quatre signaux où $U_S^1$ et $U_S^2$ représentent respectivement les signaux de mesure de l'énergie des première et deuxième parties des faisceaux de mesure (131) et de référence (132) lorsque des impulsions du faisceau de mesure (131) sont émises et $U_R^1$ et $U_R^2$ représentent respectivement les signaux de mesure de l'énergie des première et deuxième parties des faisceaux de mesure (131) et de référence (132) lorsque des impulsions du faisceau de référence (132) sont émises.

**17.** Procédé selon la revendication 16, **caractérisé en ce que** l'on mesure en outre la température du milieu dans lequel se propagent les faisceaux de mesure (131) et de référence (132) et l'on corrige la valeur déterminée de la concentration absolue du gaz à détecter, en fonction de la température mesurée.

**18.** Procédé selon l'une quelconque des revendications 16 et 17, **caractérisé en ce que** le gaz à détecter est du méthane.

**19.** Procédé selon l'une quelconque des revendications 16 à 18, **caractérisé en ce que** l'on fait passer l'intégralité du faisceau de référence (132) à travers la cellule de filtrage (107) contenant un échantillon du gaz à détecter, **en ce que** l'on effectue ladite séparation sur le faisceau de mesure (131) et le faisceau de référence (132) après passage de ce dernier à travers la cellule de filtrage (107), et **en ce que** l'on mesure l'énergie des premières parties (131A, 132A) des faisceaux de mesure (131) et de référence (132) après passage de ces premières parties à travers la cellule de mesure (110) contenant le mélange gazeux.

**20.** Procédé selon l'une quelconque des revendications 16 à 18, **caractérisé en ce que** l'on fait passer l'intégralité du faisceau de mesure (131) à travers la cellule de mesure (110) contenant le mélange gazeux, **en ce que** l'on effectue ladite séparation sur le faisceau de référence (132) et le faisceau de mesure (131) après passage de ce dernier à travers la cellule de mesure (110), et **en ce que** l'on mesure l'énergie des deuxièmes parties (131B, 132B) des faisceaux de mesure (131) et de référence (132) après passage de ces deuxièmes parties à travers la cellule de filtrage (107) contenant un échantillon du gaz à détecter.

FIG.1

FIG.2

FIG.3

FIG.3A

FIG.4

$\lambda_0, \Delta\lambda_0$

$\lambda_2, \Delta\lambda_2$

$\lambda_3, \Delta\lambda_3$

$\lambda_1, \Delta\lambda_1$

TRANSMISSION

100%

T

50%

0%

$\lambda_1$  $\lambda_2$  $\lambda_3$  $\lambda$

LONGUEUR D'ONDE

$\Delta\lambda_1$

$\Delta\lambda_2$

$\Delta\lambda_3$

A

B

C

FIG.5

FIG.6A

Intensité

Longueur d'onde

FIG.6B

Intensité

Longueur d'onde

FIG.6C

Intensité

Longueur d'onde

FIG.6D

Intensité

Longueur d'onde

# EP 1 160 565 A1

**Office européen des brevets**

## RAPPORT DE RECHERCHE EUROPEENNE

Numéro de la demande

EP 01 40 1408

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 4 176 963 A (FABINSKI WALTER ET AL) 4 décembre 1979 (1979-12-04) * colonne 1, ligne 61 - colonne 2, ligne 39 * * colonne 2, ligne 63 - colonne 4, ligne 28 * * figures 1,2 * --- | 1,8-11, 16,19 | G01N21/35 G01N21/31 |
| Y | US 4 899 053 A (LAI N C JOSEPH ET AL) 6 février 1990 (1990-02-06) * colonne 5, ligne 45 - colonne 6, ligne 44 * * figures 4,4A * --- | 1,8-11, 16,19 | |
| A | US 4 053 236 A (ATWOOD JOHN G ET AL) 11 octobre 1977 (1977-10-11) * colonne 2, ligne 27 - colonne 4, ligne 3 * * figure 1 * --- | 1,2, 8-12,15, 16,19 | |
| A | US 5 705 816 A (RONGE CATHERINE ET AL) 6 janvier 1998 (1998-01-06) * colonne 7, ligne 56 - colonne 8, ligne 49 * * revendication 1; figure 1 * --- | 1,3,6, 11,13, 16,18 | DOMAINES TECHNIQUES RECHERCHES (Int.Cl.7) G01N |
| A | US 4 567 366 A (SHINOHARA AKIO) 28 janvier 1986 (1986-01-28) * colonne 5, ligne 25 - colonne 7, ligne 2 * * revendication 1; figure 8 * --- | 1,5,9, 11,13,16 | |
| D,A | FR 2 772 127 A (OLDHAM FRANCE SA) 11 juin 1999 (1999-06-11) * revendications * ----- | 17 | |

Le présent rapport a été établi pour toutes les revendications

| Lieu de la recherche | Date d'achèvement de la recherche | Examinateur |
|---|---|---|
| LA HAYE | 27 août 2001 | Krametz, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

17

**ANNEXE AU RAPPORT DE RECHERCHE EUROPEENNE
RELATIF A LA DEMANDE DE BREVET EUROPEEN NO.**

EP 01 40 1408

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-08-2001

| Document brevet cité au rapport de recherche | | Date de publication | Membre(s) de la famille de brevet(s) | | Date de publication |
|---|---|---|---|---|---|
| US 4176963 | A | 04-12-1979 | DE | 2553565 A | 08-06-1977 |
| | | | FR | 2333235 A | 24-06-1977 |
| | | | GB | 1566436 A | 30-04-1980 |
| | | | IN | 146315 A | 28-04-1979 |
| | | | JP | 1305003 C | 28-02-1986 |
| | | | JP | 52067695 A | 04-06-1977 |
| | | | JP | 60029060 B | 08-07-1985 |
| | | | NL | 7610748 A,C | 01-06-1977 |
| US 4899053 | A | 06-02-1990 | AUCUN | | |
| US 4053236 | A | 11-10-1977 | DE | 2537494 A | 11-03-1976 |
| | | | GB | 1514507 A | 14-06-1978 |
| | | | JP | 1214191 C | 27-06-1984 |
| | | | JP | 51055284 A | 14-05-1976 |
| | | | JP | 58047654 B | 24-10-1983 |
| US 5705816 | A | 06-01-1998 | FR | 2733319 A | 25-10-1996 |
| | | | CN | 1148173 A | 23-04-1997 |
| | | | EP | 0738887 A | 23-10-1996 |
| | | | JP | 9033430 A | 07-02-1997 |
| | | | KR | 169072 B | 30-03-1999 |
| US 4567366 | A | 28-01-1986 | JP | 1600118 C | 31-01-1991 |
| | | | JP | 2020934 B | 11-05-1990 |
| | | | JP | 59212738 A | 01-12-1984 |
| | | | JP | 1595388 C | 27-12-1990 |
| | | | JP | 2020935 B | 11-05-1990 |
| | | | JP | 60029642 A | 15-02-1985 |
| | | | JP | 1598539 C | 28-01-1991 |
| | | | JP | 2020056 B | 08-05-1990 |
| | | | JP | 59056151 A | 31-03-1984 |
| | | | DE | 3334264 A | 05-04-1984 |
| FR 2772127 | A | 11-06-1999 | EP | 0921390 A | 09-06-1999 |
| | | | US | 6218666 B | 17-04-2001 |

EPO FORM P0460

Pour tout renseignement concernant cette annexe : voir Journal Officiel de l'Office européen des brevets, No.12/82